# EUROPÄISCHE PATENTSCHRIFT

(11) **EP 4 286 766 B1**
(45) Veröffentlichungstag und Bekanntmachung des Hinweises auf die Patenterteilung: **18.12.2024**
(21) Anmeldenummer: 22176988.8
(22) Anmeldetag: 02.06.2022
(51) Int. Cl.: F24S 25/30, F24S 25/636, F24S 25/70

(54) **MODULKLEMME**
CLAMP FOR MODULES
PINCE POUR MODULE

(43) Veröffentlichungstag der Anmeldung: 06.12.2023
(73) Patentinhaber: B & K Solare Zukunft GmbH, 33332 Gütersloh (DE)
(72) Erfinder: KISIEL, Martin, 33332 Gütersloh (DE); BEHNKE, Patrick, 33332 Gütersloh (DE)
(74) Vertreter: Hoefer & Partner Patentanwälte mbB

(56) Entgegenhaltungen:
- EP-A2- 2 292 988
- DE-U1- 202012 005 671
- DE-U1- 202017 107 703
- US-A1- 2013 320 166
- US-A1- 2015 184 896
- US-B2- 9 147 986

## Beschreibung

Die Erfindung betrifft eine Modulklemme zum Befestigen eines Moduls. Bei dem Modul handelt es sich insbesondere um ein Photovoltaik-Modul oder Solar-Modul.

Aus dem Stand der Technik sind Modulklemmen bekannt, mit denen beispielsweise Photovoltaik-Module auf Dächern befestigt werden. Hierzu werden üblicherweise mehrere Schienen mit Nuten verlegt. In den Nuten der Schienen können Modulklemmen eingesetzt werden. Die Modulklemmen wiederum weisen entsprechende Modulhalter auf, die an den Modulen eingehängt werden. Dadurch ist es möglich, die Module zwischen dem Modulhalterhalter und der darunter liegenden Schiene einzuklemmen.

EP 2 292 988 A2 zeigt eine Befestigungsvorrichtung für die Befestigung von Solarpanelen an einer Montageschiene.

DE 20 2012 005 671 U1 zeigt eine Befestigungsvorrichtung für Solarmodule und eine entsprechende Anordnung mit der Befestigungsvorrichtung.

US 9,147,986 B2 zeigt ein Befestigungssystem für Solarmodule an einer Schiene. Es ist Aufgabe vorliegender Erfindung eine Modulklemme anzugeben, die eine schnelle und zuverlässige Montage von Modulen ermöglicht.

Die Lösung dieser Aufgabe erfolgt durch die Merkmale des Anspruchs 1. Die abhängigen Ansprüche haben bevorzugte Ausgestaltungen der Erfindung zum Gegenstand.

Im Folgenden wird eine erfindungsgemäße Modulklemme beschrieben. Diese Modulklemme ist Bestandteil einer erfindungsgemäßen Anordnung. Die Anordnung umfasst neben der Modulklemme auch eine Schiene und vorzugsweise auch das Modul.

Bei dem Modul handelt es sich vorzugsweise um ein Photovoltaik-Modul oder ein Solar-Modul. Das Photovoltaik-Modul wird zum direkten Erzeugen elektrischen Stroms eingesetzt. Das Solar-Modul wird zur direkten Erwärmung einer durch das Solar-Modul durchlaufenden Flüssigkeit verwendet. In beiden Fällen handelt es sich um plattenförmige Elemente, die entsprechend schnell und zuverlässig auf Dächern oder auf sonstigen Trägern zu montieren sind.

Die Schiene der erfindungsgemäßen Anordnung weist eine Nut auf, in die ein Nutenstein der Modulklemme eingesetzt werden kann. Insbesondere handelt es sich bei der Schiene um ein Strangpressprofil, beispielsweise aus Aluminium.

Die erfindungsgemäße Modulklemme ist zum Klemmen des Moduls relativ zur Schiene ausgebildet. Hierzu weist die Modulklemme einen Modulhalter auf. Der Modulhalter ist zur Anordnung an dem Modul ausgebildet. Insbesondere weist der Modulhalter einen Grundkörper auf, von dem sich eine Haltenase erstreckt. Die Haltenase kann in eine Nut der Module eingesteckt werden oder auf die Module aufgelegt werden, sodass mit dem Modulhalter das Modul nach unten belastet und somit befestigt werden kann. Insbesondere ist vorgesehen, dass der Modulhalter auf zwei gegenüberliegenden Seiten jeweils eine solche Haltenase aufweist, sodass der Modulhalter zwischen zwei Modulen angeordnet werden kann und beide Module gleichzeitig nach unten hält.

An der Unterseite liegt das Modul entweder auf der beschriebenen Schiene oder einer entsprechenden Auflagefläche auf, die wiederum fest mit der Schiene verbunden ist. Dadurch kann mit der Modulklemme das Modul relativ zur Schiene geklemmt und somit befestigt werden.

Neben dem beschriebenen Modulhalter umfasst die Modulklemme auch den Nutenstein. Dieser Nutenstein kann in der Nut der beschriebenen Schiene aufgenommen werden. Eine Schraube der Modulklemme verbindet den Nutenstein mit dem Modulhalter. Die Schraube erstreckt sich entlang einer Längsachse.

Die Schraube ragt durch den Modulhalter und ist in den Nutenstein eingeschraubt. Dadurch befindet sich der Modulhalter am oberen Ende der Schraube, sodass der Schraubenkopf am Modulhalter aufliegt. Das untere Ende der Schraube steckt mit seinem Außengewinde in einem entsprechenden Innengewinde des Nutensteins.

Beim Klemmen des Moduls mit der Modulklemme wird die Schraube gedreht, wodurch sich der Abstand zwischen Nutenstein und Modulhalter verkleinert. Dadurch wird das Modul durch den Modulhalter nach unten belastet und somit eingeklemmt.

Bevor jedoch dieses Einklemmen des Moduls erfolgt, wird die Modulklemme beim Montagevorgang in die Nut der Schiene eingesetzt und würde - ohne weiterer Maßnahmen - umkippen, da erst nach entsprechendem Einsetzen des Moduls und Anziehen der Schraube die Modulklemme relativ zur Schiene fest ist.

Um dieses Umkippen der Modulklemme beim Montagevorgang zu vermeiden, wird erfindungsgemäß ein Halteelement verwendet. Dieses Halteelement weist einen oberen Abschnitt, einen unteren Abschnitt und einen elastischen Abschnitt auf. Der elastische Abschnitt verbindet dabei den oberen Abschnitt mit dem unteren Abschnitt. Insbesondere ist der elastische Abschnitt so ausgebildet, dass der obere Abschnitt - unter elastischer Verformung des elastischen Abschnitts - auf den unteren Abschnitt zu bewegbar ist. Dadurch stellt der elastische Abschnitt zunächst einen gewünschten Abstand zwischen oberem Abschnitt und unterem Abschnitt sicher, ermöglicht aber gleichzeitig auch das Festziehen der Schraube und somit eine Verkürzung des Abstandes zwischen oberem Abschnitt und unterem Abschnitt.

Das Halteelement steckt auf der Schraube und ist somit zwischen dem Modulhalter und dem Nutenstein angeordnet.

Das Halteelement ist so ausgebildet und angeordnet, dass der Modulhalter am oberen Abschnitt des Halteelements aufliegt und der untere Abschnitt des Halteelements zur Abstützung an der Schien ausgebildet ist. Dadurch ist insbesondere möglich, dass die Modulklemme selbständig stehend auf der Schiene anordenbar ist, bevor das Modul geklemmt ist. Unter "selbständig stehend" ist insbesondere zu verstehen, dass in diesem Zustand die Schraube im Wesentlichen senkrecht zur Schiene steht. Durch das selbständige Stehen der Modulklemme auf der Schiene befindet sich der Modulhalter an der richtigen Position und der richtigen Höhe, sodass das Modul - insbesondere ohne die Modulklemme dabei zu halten oder auszurichten - eingesetzt werden kann. Dadurch ergibt sich ein schneller und sicherer Montagevorgang.

Der untere Abschnitt des Halteelements ist vorzugsweise zur Auflage auf der Schiene und/oder zum Klemmen an der Schiene ausgebildet. Wie noch im Detail beschrieben wird, kann eine optionale Kontaktplatte zwischen Halteelement und Schiene eingesetzt werden. Bei dieser optionalen Ausgestaltung liegt dann das Halteelement nicht zwangsläufig direkt auf der Schiene, sondern es befindet sich eben diese Kontaktplatte zwischen dem Halteelement und der Schiene.

Sowohl durch das Aufliegen auf der Schiene, insbesondere mit entsprechend großer Auflagefläche, und/oder durch das Klemmen an der Schiene ist es möglich, dass das Halteelement senkrecht zur Schiene steht. Da die Schraube durch das Halteelement hindurch verläuft, hält das Halteelement die Schraube ebenfalls in der senkrechten Position. Gleichzeitig ist sichergestellt, dass der Modulhalter oben auf dem Halteelement aufliegt, sodass sich dieser an der gewünschten Position befindet.

Für das Aufliegen auf der Schiene weist der untere Abschnitt des Halteelements vorzugsweise zumindest eine ebene Auflagefläche auf. Die Auflagefläche ist zum Aufliegen, gegebenenfalls mit dazwischenliegender Kontaktplatte, auf einer der Auflagegegenflächen der beschriebenen Schiene ausgebildet.

Besonders bevorzugt ist die zumindest eine Auflagefläche zur Längsachse geneigt. Insbesondere steht die Auflagefläche mit einer Abweichung von +/- 20°, insbesondere +/- 10°, senkrecht zur Längsachse.

Insbesondere ist die Schiene so ausgebildet, dass die Nut mit einem Schlitz nach oben offen ist. Durch diesen Schlitz kann die Schraube der Modulklemme ragen. Der Schlitz ist beidseitig vorzugsweise durch jeweils einen Schenkel der Schiene begrenzt. Im montierten Zustand befindet sich der Nutenstein in der Nut und wird bei angezogener Schraube gegen die Innenseite der beiden Schenkel gedrückt. Die obenliegenden Seiten der beiden Schenkel bilden vorzugsweise die genannten Auflagegegenflächen für das Halteelement der Modulklemme.

Besonders bevorzugt sind zwei gegenüberliegende Auflageflächen vorgesehen, wobei die Schraube zwischen den beiden Auflageflächen angeordnet ist. Dadurch können die beiden Auflageflächen beispielsweise auf den beiden gegenüberliegenden Schenkeln der beschriebenen Schiene aufliegen.

Die beiden einander zugewandten Flächen der Schenkel, also die Flächen, die den Schlitz beidseitig begrenzen, werden vorzugsweise als Klemmgegenflächen für das Halteelement der Modulklemme verwendet.

Für das Klemmen des Halteelements an der Schiene ist zumindest ein Klemmfortsatz vorgesehen. An dem Klemmfortsatz ist vorzugsweise eine Klemmfläche ausgebildet, die an der beschriebenen Klemmgegenfläche der Schiene klemmt.

Die zumindest eine Klemmgegenfläche erstreckt sich vorzugsweise mit einer Abweichung von +/- 20°, insbesondere +/- 10°, parallel zur Längsachse.

Es ist bevorzugt vorgesehen, dass das Halteelement zumindest zwei gegenüberliegende Klemmfortsätze mit jeweils einer Klemmfläche aufweist. Die Schraube verläuft vorzugsweise zwischen den beiden Klemmfortsätzen.

Des Weiteren ist bevorzugt vorgesehen, dass der untere Abschnitt des Halteelements einen Quersteg aufweist. Der Quersteg steht insbesondere quer zur Längsachse. Vorzugsweise weist der Quersteg in seiner Mitte eine Aussparung, insbesondere ein Loch auf. Durch diese Aussparung verläuft die Schraube.

Des Weiteren ist bevorzugt vorgesehen, dass der Quersteg an seinen beiden äußeren Seiten die beiden gegenüberliegenden Auflageflächen bildet.

Darüber hinaus ist bevorzugt vorgesehen, dass sich von dem Quersteg aus in Richtung des Nutensteins die beiden beschriebenen Klemmfortsätze erstrecken.

Der elastische Abschnitt, also die Verbindung zwischen oberem Abschnitt und unterem Abschnitt des Halteelements, weist bevorzugt zumindest eine Säule auf. Insbesondere ist vorgesehen, dass der elastische Abschnitt zwei gegenüberliegende Säulen aufweist und die Schraube zwischen den beiden Säulen verläuft.

Die zumindest eine Säule weist vorzugsweise eine der Schraube zugewandte Innenseite und eine gegenüberliegende Außenseite auf. Die Innenseite ist vorzugsweise konkav. Die Außenseite ist vorzugsweise konvex. Dadurch ist die Säule gebogen geformt und kann bei Anziehen der Schraube nach außen ausbauchen.

Vorzugsweise ist vorgesehen, dass das gesamte Halteelement einteilig gefertigt ist. Insbesondere ist das Halteelement aus Kunststoff gefertigt. Insbesondere handelt es sich um ein Spritzgussteil.

Des Weiteren ist bevorzugt vorgesehen, dass der obere Abschnitt und der untere Abschnitt des Halteelements gleich ausgebildet sind. Dadurch ist es möglich, dass das Halteelement mit beliebiger Ausrichtung auf die Schraube aufsteckbar ist und dabei seine Funktion erfüllt. Im oberen Abschnitt werden die beiden "nicht benötigten" Klemmfortsätze als Auflage für den Modulhalter genutzt.

Unabhängig davon, ob der obere und der untere Abschnitt gleich ausgebildet sind, ist bevorzugt vorgesehen, dass sich auch im oberen Abschnitt eine Aussparung, insbesondere Loch, befindet, durch die die Schraube ragt. Dadurch stützt das Halteelement sowohl im oberen Abschnitt als auch im unteren Abschnitt die Schraube ab.

Insbesondere ist das Halteelement bezüglich einer zur Längsachse senkrechten Symmetrieebene symmetrische ausgebildet. Zusätzlich oder alternativ ist das Halteelement bezüglich zumindest einer zur Längsachse parallelen Symmetrieebene symmetrisch ausgebildet.

Wie bereits erwähnt, kann die Modulklemme eine Kontaktplatte aufweisen. Die Kontaktplatte weist vorzugsweise zumindest ein Kratzelement auf, das zum Aufkratzen einer daran anliegen Oberfläche ausgebildet ist. Die Kontaktplatte weist vorzugsweise eine Aussparung für die Schraube auf, sodass die Kontaktplatte zwischen dem Halteelement und dem Nutenstein auf die Schraube aufgesteckt werden kann.

Bei der Montage der Modulklemme wird diese entlang der Schiene verschoben. Dabei kann das Kratzelement der Kontaktplatte die Oberfläche der Schiene aufkratzen. Bei dieser Oberfläche handelt es sich insbesondere um eine elektrisch nicht oder elektrisch schlecht leitende Schicht, beispielsweise eloxiertes Aluminium. Durch das Aufkratzen der Oberfläche wird ein elektrischer Kontakt zwischen der Kontaktplatte und der Schiene gewährleistet. Die Kontaktplatte wiederum steht in elektrisch leitendem Kontakt mit der Schraube und die Schraube steht in elektrisch leitendem Kontakt mit dem Modulhalter. Der Modulhalter wiederum kontaktiert das Modul. Dadurch ist eine Erdung des Moduls über die Schiene möglich.

Weitere Einzelheiten, Vorteile und Merkmale der Erfindung ergeben sich aus nachfolgender Beschreibung eines Ausführungsbeispiels anhand der Zeichnung. Es zeigen:
- Fig. 1: eine perspektivische Ansicht einer erfindungsgemäßen Anordnung mit erfindungsgemäßer Modulklemme gemäß einem Ausführungsbeispiel,
- Fig. 2: eine perspektivische Ansicht eines Halteelements der erfindungsgemäßen Modulklemme gemäß dem Ausführungsbeispiel,
- Fig. 3: eine Seitenansicht des Halteelements der erfindungsgemäßen Modulklemme gemäß dem Ausführungsbeispiel und
- Fig. 4: die erfindungsgemäße Anordnung mit erfindungsgemäßer Modulklemme gemäß dem Ausführungsbeispiel mit einer Kontaktplatte.

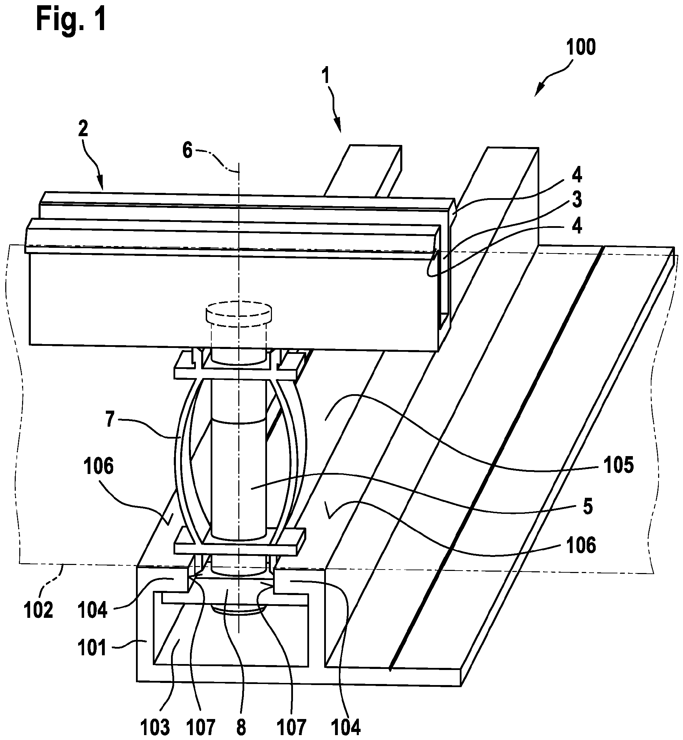

Im Folgenden wird eine Anordnung 100 mit Modulklemme 1 im Detail anhand der Figuren 1 bis 4 beschrieben. Soweit nicht im Einzelnen anders erwähnt, wird dabei stets auf alle Figuren Bezug genommen.

Die Anordnung 100 umfasst eine Schiene 101 und insbesondere auch ein Modul 102. Bei dem Modul 102 handelt es sich insbesondere um ein Photovoltaik-Modul. Der Übersichtlichkeit halber ist das Modul 102 in den Figuren nur rein schematisch dargestellt.

Die Schiene 101 weist eine Nut 103 auf. Diese Nut 103 ist nach oben mit einem Schlitz 105 offen. Der Schlitz 105 ist beidseitig durch jeweils einen Schenkel 104 der Schiene 101 begrenzt. Auf der Oberseite der beiden Schenkel 104 ist jeweils eine Auflagegegenfläche 106 ausgebildet. Die einander zugewandten Seiten der Schenkel 104 - somit die seitlichen Begrenzungen des Schlitzes 105 - werden als Klemmgegenflächen 107 bezeichnet.

Die Modulklemme 1 umfasst einen Modulhalter 2. Der Modulhalter 2 weist einen Grundkörper 3 auf; der Grundkörper 3 ist im gezeigten Ausführungsbeispiel U-förmig ausgestaltet.

An dem Grundkörper 3 befinden sich beidseitig Haltenasen 4. Unter jede Haltenase 4 kann eines der Module 102 gelegt werden, sodass mit dem Modulhalter 2 das entsprechende Modul 102 nach unten belastet werden kann.

Der Modulhalter 2 kann auch nur eine Haltenase 4 aufweisen, wobei es sich beispielsweise um eine Modulklemme 1 an einem Seitenbereich und nicht zwischen zwei Modulen 102 handelt.

Die Modulklemme 1 umfasst ferner eine Schraube 5, die sich entlang einer Längsachse 6 erstreckt. Die Schraube 5 steckt in einem Loch des Grundkörpers 3 des Modulhalters 2 und liegt somit mit ihrem Schraubenkopf am Modulhalter 2 auf.

Das untere Ende der Schraube 5 ist in einen Nutenstein 8 eingeschraubt. Der Nutenstein 8 befindet sich in der Nut 103 und liegt an der Innenseite der beiden Schenkel 104 an.

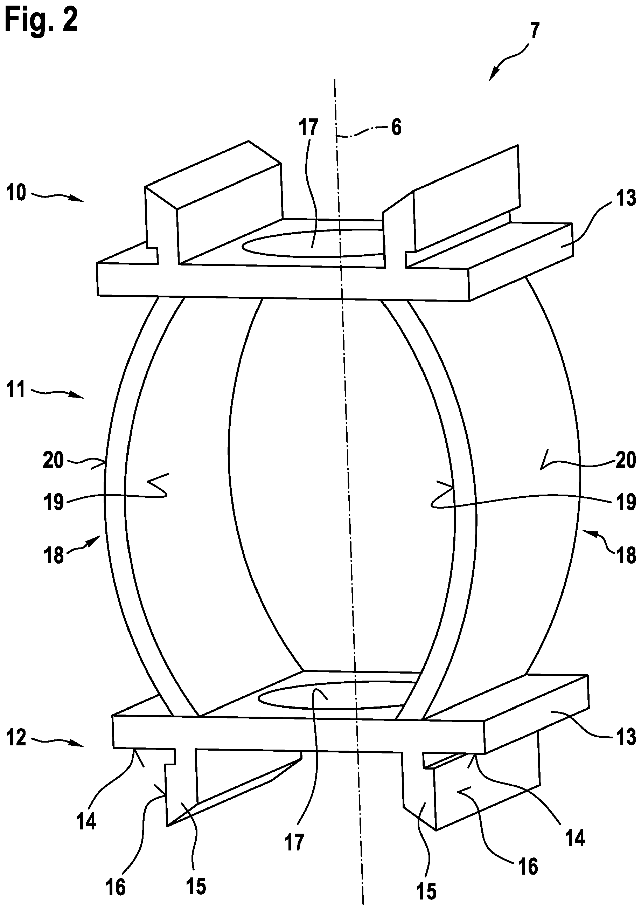

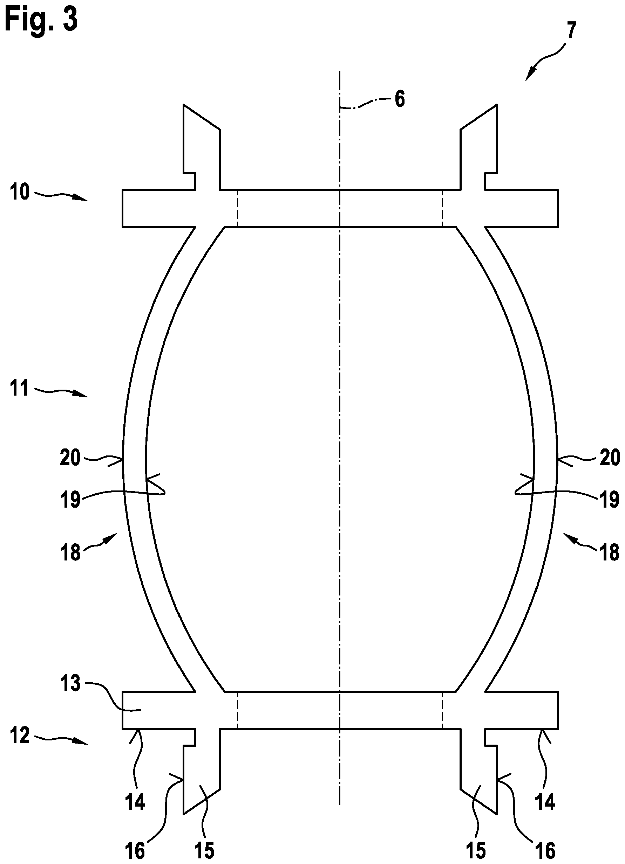

Zwischen dem Modulhalter 2 und dem Nutenstein 8 befindet sich ein Halteelement 7. Dieses Halteelement 7 ist in den Figuren 2 und 3 im Detail dargestellt. Das Halteelement 7 ist im gezeigten Ausführungsbeispiel einteilig aus Kunststoff gefertigt.

Das Halteelement 7 weist einen oberen Abschnitt 10, einen elastischen Abschnitt 11 und einen unteren Abschnitt 12 auf.

Der obere Abschnitt 10 und der untere Abschnitt 12 sind gleich ausgestaltet, sodass hier der Einfachheit halber nur der Aufbau des unteren Abschnitts 12 beschrieben wird.

Der untere Abschnitt 12 weist einen Quersteg 13 auf. In der Mitte des Querstegs 13 befindet sich eine Aussparung 17 in Form eines Lochs. Die Schraube 5 ragt durch diese Aussparung 17.

Beidseitig der Aussparung 17 weist der Quersteg 13 zwei Auflageflächen 14 auf, die im gezeigten Ausführungsbeispiel senkrecht zur Längsachse 6 stehen. Diese Auflageflächen 14 liegen auf den Auflagegegenflächen 106 der Schiene 101 auf.

Des Weiteren erstrecken sich von dem Quersteg 13 zwei Klemmfortsätze 15 in Richtung des Nutensteins 8. Die beiden Klemmfortsätze 15 weisen einander abgewandte Klemmflächen 16 auf. Diese Klemmflächen 16 liegen an den Klemmgegenflächen 107 der Schiene 101 an.Die beiden Klemmflächen 106 stehen im gezeigten Ausführungsbeispiel parallel zur Längsachse 6.

Im oberen Abschnitt 10 werden die beiden Klemmfortsätze 15 als Auflage für den Modulhalter 2 genutzt.

Der obere Abschnitt 10 und der untere Abschnitt 12, insbesondere die beiden Querstege 13, sind im elastischen Abschnitt 11 durch zwei gegenüberliegende Säulen 18 miteinander verbunden. Die Schraube 5 und somit die Längsachse 6 verlaufen zwischen den beiden Säulen 18.

Jede Säule 18 weist eine der Schraube 5 zugewandte Innenseite 19 und eine außenliegende Außenseite 20 auf. Die Innenseite ist konkav. Die Außenseite 20 ist konvex. Dadurch sind die beiden Säulen 18 nach außen vorgebogen und beim Anziehen der Schraube 5 können die Säulen 18 nach außen ausbauchen.

Es ist bevorzugt vorgesehen, unabhängig vom konkret gezeigten Ausführungsbeispiel, dass sämtliche Auflageflächen 14 zusammen eine Größe von zumindest 5 mm² bilden. Zusätzlich oder alternativ ist bevorzugt vorgesehen, dass auch die Klemmflächen 16 zusammen eine Fläche von zumindest 5 mm² bilden. Dadurch wird eine besonders stabile Auflage und/oder ein besonders sicheres Klemmen des Halteelements 7 an der Schiene 101 erreicht.

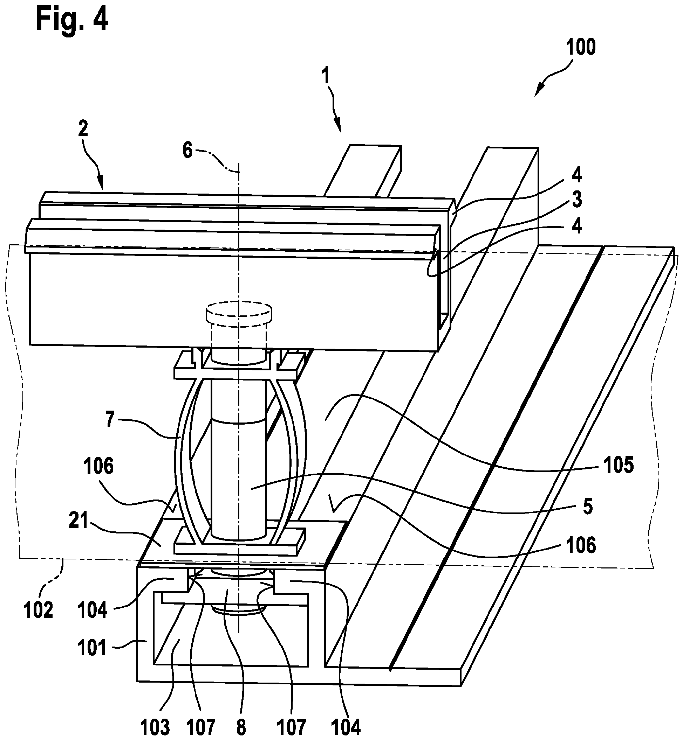

Figur 4 zeigt, dass - gemäß einer optionalen Ausgestaltung - die Modulklemme 1 eine Kontaktplatte 21 aufweisen kann. Diese Kontaktplatte 21 weist vorzugsweise eine Aussparung für die Schraube 5 auf, sodass die Kontaktplatte 21 zwischen dem Halteelement 7 und dem Nutenstein 8 auf die Schraube 5 aufgesteckt werden kann.

### Bezugszeichenliste

- 1: Modulklemme
- 2: Modulhalter
- 3: Grundkörper
- 4: Haltenasen
- 5: Schraube
- 6: Längsachse
- 7: Halteelement
- 8: Nutenstein
- 10: oberer Abschnitt
- 11: elastischer Abschnitt
- 12: unterer Abschnitt
- 13: Quersteg
- 14: Auflageflächen
- 15: Klemmfortsatz
- 16: Klemmflächen
- 17: Aussparung
- 18: Säulen
- 19: Innenseiten
- 20: Außenseiten
- 21: Kontaktplatte
- 100: Anordnung
- 101: Schiene
- 102: Modul
- 103: Nut
- 104: Schenkel
- 105: Schlitz
- 106: Auflagegegenfläche
- 107: Klemmgegenfläche

## Patentansprüche

1. Modulklemme (1) zum Klemmen eines Moduls (102), insbesondere Photovoltaik-Modul oder Solar-Modul, relativ zu einer Schiene (101), umfassend
• einen Modulhalter (2), ausgebildet zur Anordnung an dem Modul (102),
• einen Nutenstein (8), ausgebildet zur Aufnahme in einer Nut (103) der Schiene (101),
• eine Schraube (5), die sich entlang einer Längsachse (6) erstreckt und die durch den Modulhalter (2) ragt und in den Nutenstein (8) eingeschraubt ist,
• und ein Halteelement (7), das auf die Schraube (5) aufgesteckt ist und zwischen Modulhalter (2) und Nutenstein (8) angeordnet ist,
• wobei das Halteelement (7) einen oberen Abschnitt (10), einen unteren Abschnitt (12) und einen elastischen Abschnitt (11) aufweist, wobei der elastische Abschnitt (11) den oberen Abschnitt (10) mit dem unteren Abschnitt (12) verbindet,
• wobei der Modulhalter (2) am oberen Abschnitt (10) aufliegt und der untere Abschnitt (12) zur Abstützung an der Schiene (101) ausgebildet ist, sodass die Modulklemme (1), bevor das Modul (102) geklemmt ist, selbstständig stehend auf der Schiene (101) anordenbar ist, **dadurch gekennzeichnet, dass** der untere Abschnitt (12) zumindest einen Klemmfortsatz (15) aufweist, der zum Einstecken in die Schiene (101) ausgebildet ist.

2. Modulklemme nach Anspruch 1, wobei der untere Abschnitt (12) zur Auflage auf der Schiene (101), ggf. mit dazwischenliegender Kontaktplatte (21), und/oder zum Klemmen an der Schiene (101) ausgebildet ist.

3. Modulklemme nach Anspruch 2, wobei der untere Abschnitt (12) zumindest eine ebene Auflagefläche (14) zur Auflage auf der Schiene (101), ggf. mit dazwischenliegender Kontaktplatte (21), aufweist.

4. Modulklemme nach Anspruch 3, wobei die Schraube (5) durch eine Aussparung (17) des unteren Abschnitts (12) verläuft, und wobei zwei der Auflageflächen (14) ausgebildet sind und die Schraube (5) zwischen den beiden Auflageflächen (14) verläuft.

5. Modulklemme nach Anspruch 4, wobei der untere Abschnitt (12) einen Quersteg (13) umfasst, in dem mittig die Aussparung (17) ausgebildet ist, und der die beiden Auflageflächen (14) bildet.

6. Modulklemme nach einem der vorhergehenden Ansprüche, wobei der untere Abschnitt (12) zwei der Klemmfortsätze (15) aufweist und die Schraube (5) zwischen den beiden Klemmfortsätzen (15) verläuft.

7. Modulklemme nach einem der Ansprüche 5 bis 6, wobei sich der zumindest eine Klemmfortsatz (15) vom Quersteg (13) aus in Richtung des Nutensteins (8) erstreckt.

8. Modulklemme nach einem der vorhergehenden Ansprüche, wobei der elastische Abschnitt (11) zumindest eine Säule (18) umfasst, die den oberen Abschnitt (10) mit dem unteren Abschnitt (12) verbindet; wobei vorzugsweise der elastische Abschnitt (11) zwei der Säulen (18) umfasst und die Schraube (5) zwischen den beiden Säulen (18) steht.

9. Modulklemme nach Anspruch 8, wobei die zumindest eine Säule (18) an ihrer der Schraube (5) zugewandten Innenseite (19) konkav und an der gegenüberliegenden Außenseite (20) konvex ausgebildet ist.

10. Modulklemme nach einem der vorhergehenden Ansprüche, wobei das gesamte Haltelement (7) einteilig, insbesondere aus Kunststoff, gefertigt ist.

11. Modulklemme nach einem der vorhergehenden Ansprüche, wobei der obere Abschnitt (10) und der untere Abschnitt (12) des Haltelements (7) gleich ausgebildet sind, sodass das Haltelement (7) mit beliebiger Ausrichtung auf die Schraube (5) aufsteckbar ist.

12. Modulklemme nach einem der vorhergehenden Ansprüche, wobei zwischen dem Halteelement (7) und dem Nutenstein (8) eine Kontaktplatte (21) aus elektrisch leitendem Material auf der Schraube (5) steckt, wobei die Kontaktplatte (21) vorzugsweise zumindest ein Kratzelement zum Aufkratzen einer Oberfläche der Schiene (101) aufweist.

13. Anordnung (100) umfassend zumindest eine Schiene (101) mit einer Nut (103) und zumindest eine Modulklemme (1) nach einem der vorhergehenden Ansprüche, wobei der Nutenstein (8), zur Aufnahme in der Nut (103) ausgebildet ist.

14. Anordnung nach Anspruch 13, umfassend ein Modul (102), insbesondere Photovoltaik-Modul oder Solar-Modul, an dem der Modulhalter (2) anordenbar, insbesondere einhängbar ist, sodass das Modul (102) zwischen dem Modulhalter (2) und der Schiene (101) oder einer mit der Schiene (101) fest verbundenen Fläche einklemmbar ist.

## Claims

1. A module clamp (1) for clamping a module (102), in particular a photovoltaic module or solar module, relative to a rail (101), comprising
- a module holder (2) formed to be arranged on the module (102),
- a slot nut (8) formed to be received in a groove (103) of the rail (101),
- a screw (5), which extends along a longitudinal axis (6) and which projects through the module holder (2) and is screwed into the slot nut (8)
- and a holding element (7), which is fitted onto the screw (5) and is arranged between the module holder (2) and the slot nut (8),
- wherein the holding element (7) comprises an upper section (10), a lower section (12) and an elastic section (11), wherein the elastic section (11) connects the upper section (10) to the lower section (12),
- wherein the module holder (2) rests on the upper section (10) and the lower section (12) is formed for supporting on the rail (101), so that the module clamp (1), before the module (102) is clamped, can be arranged independently standing on the rail (101),
- **characterized in that** the lower section (12) comprises at least one clamping extension (15), which is formed to be inserted into the rail (101).

2. The module clamp according to claim 1, wherein the lower section (12) is formed to rest on the rail (101), optionally with an intermediate contact plate (21), and/or to clamp on the rail (101).

3. The module clamp according to claim 2, wherein the lower section (12) comprises at least one flat support surface (14) to rest on the rail (101), optionally with an intermediate contact plate (21).

4. The module clamp according to claim 3, wherein the screw (5) extends through a recess (17) of the lower section (12), and wherein two of the support surfaces (14) are formed and the screw (5) extends between the two support surfaces (14).

5. The module clamp according to claim 4, wherein the lower section (12) comprises a crosspiece (13), in the center of which the recess (17) is formed, and which forms the two support surfaces (14).

6. The module clamp according to any of the preceding claims, wherein the lower section (12) comprises two of the clamping extensions (15) and the screw (5) extends between the two clamping extensions (15).

7. The module clamp according to any of claims 5 to 6, wherein the at least one clamping extension (15) extends from the crosspiece (13) in the direction of the slot nut (8).

8. The module clamp according to any of the preceding claims, wherein the resilient portion (11) comprises at least one column (18) connecting the upper portion (10) to the lower portion (12); wherein preferably the resilient portion (11) comprises two of the columns (18) and the screw (5) is positioned between the two columns (18).

9. The module clamp according to claim 8, wherein the at least one column (18) is formed concave at its inner side (19) facing the screw (5) and convex at the opposite outer side (20).

10. The module clamp according to any of the preceding claims, wherein the entire holding element (7) is manufactured in one piece, in particular made of plastic.

11. The module clamp according to any of the preceding claims, wherein the upper section (10) and the lower section (12) of the holding element (7) are formed identically, so that the holding element (7) can be fitted onto the screw (5) with any orientation.

12. The module clamp according to any of the preceding claims, wherein a contact plate (21) made of electrically conductive material is inserted onto the screw (5) between the holding element (7) and the slot nut (8), wherein the contact plate (21) preferably comprises at least one scratching element for scratching a surface of the rail (101).

13. An arrangement (100) comprising at least one rail (101) with a slot (103) and at least one module clamp (1) according to one of the preceding claims, wherein the slot nut (8) is formed to be received in the slot (103).

14. The arrangement according to claim 13, comprising a module (102), in particular a photovoltaic module or solar module, on which the module holder (2) can be arranged, in particular can be suspended, so that the module (102) can be clamped between the module holder (2) and the rail (101) or a surface firmly connected to the rail (101).

## Revendications

1. Pince pour module (1) pour le serrage d'un module (102), en particulier d'un module photovoltaïque ou module solaire, par rapport à un rail (101), comprenant
- un support de module (2) réalisé pour l'agencement au niveau du module (102),
- un coulisseau (8) réalisé pour la réception dans une rainure (103) du rail (101),
- une vis (5) qui s'étend le long d'un axe longitudinal (6) et qui traverse le support de module (2) et est serrée dans le coulisseau (8),
- et un élément de retenue (7) qui est enfiché sur la vis (5) et est agencé entre le support de module (2) et le coulisseau (8),
- dans laquelle l'élément de retenue (7) présente une section supérieure (10), une section inférieure (12) et une section élastique (11), dans laquelle la section élastique (11) relie la section supérieure (10) à la section inférieure (12),
- dans laquelle le support de module (2) repose contre la section supérieure (10) et la section inférieure (12) est réalisée pour l'appui contre le rail (101) de sorte que la pince pour module (1), avant que le module (102) ne soit serré, puisse être agencée automatiquement verticalement sur le rail (101),
**caractérisée en ce que**
la section inférieure (12) présente au moins un prolongement de serrage (15) qui est réalisé pour l'enfichage dans le rail (101).

2. Pince pour module selon la revendication 1, dans laquelle la section inférieure (12) est réalisée pour l'appui sur le rail (101), éventuellement avec une plaque de contact (21) intermédiaire, et/ou pour le serrage sur le rail (101).

3. Pince pour module selon la revendication 2, dans laquelle la section inférieure (12) présente au moins une surface d'appui (14) plane pour l'appui sur le rail (101), éventuellement avec une plaque de contact (21) intermédiaire.

4. Pince pour module selon la revendication 3, dans laquelle la vis (5) s'étend à travers un évidement (17) de la section inférieure (12), et dans laquelle deux des surfaces d'appui (14) sont réalisées et la vis (5) s'étend entre les deux surfaces d'appui (14).

5. Pince pour module selon la revendication 4, dans laquelle la section inférieure (12) comprend une entretoise (13), dans laquelle l'évidement (17) est réalisé au milieu, et qui forme les deux surfaces d'appui (14).

6. Pince pour module selon l'une quelconque des revendications précédentes, dans laquelle la section inférieure (12) présente deux des prolongements de serrage (15) et la vis (5) s'étend entre les deux prolongements de serrage (15).

7. Pince pour module selon l'une quelconque des revendications 5 à 6, dans laquelle l'au moins un prolongement de serrage (15) s'étend depuis l'entretoise (13) en direction du coulisseau (8).

8. Pince pour module selon l'une quelconque des revendications précédentes, dans laquelle la section élastique (11) comprend au moins une colonne (18) qui relie la section supérieure (10) à la section inférieure (12) ; dans laquelle de préférence la section élastique (11) comprend deux des colonnes (18) et la vis (5) se situe entre les deux colonnes (18).

9. Pince pour module selon la revendication 8, dans laquelle l'au moins une colonne (18) est réalisée de manière concave au niveau de son côté intérieur (19) tourné vers la vis (5) et de manière convexe au niveau du côté extérieur (20) opposé.

10. Pince pour module selon l'une quelconque des revendications précédentes, dans laquelle l'élément de retenue (7) entier est fabriqué en un bloc, en particulier en matière plastique.

11. Pince pour module selon l'une quelconque des revendications précédentes, dans laquelle la section supérieure (10) et la section inférieure (12) de l'élément de retenue (7) sont réalisées de manière identique de sorte que l'élément de retenue (7) puisse être enfiché avec une orientation quelconque sur la vis (5).

12. Pince pour module selon l'une quelconque des revendications précédentes, dans laquelle une plaque de contact (21) en un matériau électroconducteur s'enfiche sur la vis (5) entre l'élément de retenue (7) et le coulisseau (8), dans laquelle la plaque de contact (21) présente de préférence au moins un élément de grattage pour le grattage d'une surface du rail (101).

13. Ensemble (100) comprenant au moins un rail (101) avec une rainure (103) et au moins une pince pour module (1) selon l'une quelconque des revendications précédentes, dans lequel le coulisseau (8) est réalisé pour la réception dans la rainure (103).

14. Ensemble selon la revendication 13, comprenant un module (102), en particulier module photovoltaïque ou module solaire, au niveau duquel le support de module (2) peut être agencé, en particulier peut être accroché de sorte que le module (102) puisse être serré entre le support de module (2) et le rail (101) ou une surface reliée fixement au rail (101).
